Europäisches Patentamt

European Patent Office

Office européen des brevets

(19)

(11) **EP 0 478 641 B2**

(12) ## NEUE EUROPÄISCHE PATENTSCHRIFT

(45) Veröffentlichungstag und Bekanntmachung des Hinweises auf die Entscheidung über den Einspruch:
**07.11.2001 Patentblatt 2001/45**

(45) Hinweis auf die Patenterteilung:
**25.08.1993 Patentblatt 1993/34**

(21) Anmeldenummer: **90909663.8**

(22) Anmeldetag: **19.06.1990**

(51) Int Cl.⁷: $B29C\ 47/88$

(86) Internationale Anmeldenummer:
**PCT/EP90/00969**

(87) Internationale Veröffentlichungsnummer:
**WO 90/15707 (27.12.1990 Gazette 1990/29)**

(54) **VERFAHREN UND VORRICHTUNG ZUR BLASFOLIENHERSTELLUNG**

PROCESS AND DEVICE FOR PRODUCING BUBBLE-FILM

PROCEDE ET DISPOSITIF POUR LA FABRICATION DE FEUILLES SOUFFLEES

(84) Benannte Vertragsstaaten:
**AT BE CH DE DK ES FR GB IT LI LU NL SE**

(30) Priorität: **21.06.1989 DE 3920194**
**18.01.1990 DE 4001287**

(43) Veröffentlichungstag der Anmeldung:
**08.04.1992 Patentblatt 1992/15**

(73) Patentinhaber: **KONERMANN, Stefan**
**49525 Lengerich (DE)**

(72) Erfinder: **KONERMANN, Stefan**
**49525 Lengerich (DE)**

(74) Vertreter: **Wiebusch, Manfred et al**
**TER MEER STEINMEISTER & PARTNER GbR,**
**Patentanwälte,**
**Artur-Ladebeck-Strasse 51**
**33617 Bielefeld (DE)**

(56) Entgegenhaltungen:
| EP-A- 0 062 909 | EP-A- 0 253 216 |
| EP-A- 0 264 062 | DE-A- 2 658 518 |
| DE-A- 3 336 181 | DE-A- 3 634 535 |
| DE-A- 3 707 826 | US-A- 4 209 475 |
| US-A- 4 443 400 | US-A- 4 472 343 |

• **Kunststoffe, Vol. 69, No.4, 1979, P. Plesske :**
**"Schlauchfolienkühlung - Entwicklungsstand**
**und Auswirkung von Fehlern auf die**
**Folienqualität", S. 208-214**

EP 0 478 641 B2

**Beschreibung**

Die Erfindung betrifft Verfahren und Vorrichtungen zur Herstellung von Blasfolien.

Bei herkömmlichen Verfahren zur Blasfolienherstellung ergeben sich relativ große Dickenabweichungen der Folien, die je nach Foliendicke und Qualität der Herstellungsanlage bis zu 20 % betragen können. Diese Dickenabweichungen haben vielfältige Ursachen, beispielsweise die Inhomogenität der Schmelze, Temperaturdifferenzen in der Schmelze und somit im Werkzeug sowie mechanische Fehler und Justagefehler des Werkzeugs und des Kühlsystems. Es ist bekannt, die Foliendicke dadurch zu steuern, daß die Flußgeschwindigkeit der Schmelze innerhalb des Werkzeugs durch gezielte Heizung oder Kühlung des Werkzeugs in bestimmten Umfangsbereichen verändert wird. Die entsprechenden Vorrichtungen und Werkzeuge sind jedoch sehr aufwendig, und ein nach diesem Verfahren arbeitendes Regelsystem zur Korrektur der Foliendicke ist relativ träge, da bei der Heizung und Kühlung der Werkzeugbereiche große Verzögerungszeiten auftreten.

Aus der DE-PS 36 27 129 ist ein Verfahren der eingangs genannten Art bekannt, bei dem die Foliendicke durch Steuerung des Kühlluftstroms beeinflußt wird. Bei diesem Verfahren wird der Umstand ausgenutzt, daß heißere Bereiche der Folienblase in der Kühlzone zwischen der Düse und der Frostgrenze aufgrund der geringeren Viskosität der Schmelze stärker verstreckt werden als kühlere Bereiche, so daß sich die Dicke der Folie durch intensivere Kühlung erhöhen und durch schwächere Kühlung verringern läßt. Zur Steuerung des Kühlluftstromes sind eine Vielzahl von Stiften nahe des Luftaustritts auf dem Umfang des Kühlrings verteilt, und der Strömungwiderstand in den einzelnen Umfangsbereichen des Kühlrings wird variiert, indem die als Störkörper für die Kühlluftströmung wirkenden Stifte mehr oder weniger weit ausgefahren werden. Die Wirkung solcher Störkörper auf die Kühlluftströmung wird beschrieben in Pleßke: Schlauchfolienkühlung - Entwicklungsstand und Auswirkung von Fehlern auf die Folienqualität in "Kunststoffe" 69, Jahrgang 1979, Heft 4, Seiten 208 bis 214.

Wenn die Kühlluft die Störkörper umströmt, kommt es hinter den Störkörpern zu einer Verwirbelung der Kühlluft, und es werden unkontrollierbare örtliche Schwankungen der Kühlluftströmung am Austrittsspalt erzeugt, so daß sich eine einheitliche Foliendicke nur schwer erreichen läßt.

Ein weiteres Problem besteht darin, daß die durch die Störkörper bedingte Erhöhung des Strömungswiderstands an einer Stelle des Umfangs zu einem erhöhten Staudruck stromaufwärts der Störkörper führt, so daß sich der Luftdurchsatz in den benachbarten Umfangsbereichen erhöht. Zwischen den Kühlluftdurchsätzen in den verschiedenen Umfangsbereichen besteht somit ein kompliziertes System von Wechselwirkungen, das regelungstechnisch kaum zu beherrschen ist. Aufgrund dieses Problems ist es schwierig, die Störkörper anhand der gemessenen Foliendicken in den verschiedenen Umfangsbereichen so zu steuern, daß das Dickenprofil der Folie in einem geschlossenen Regelkreis geregelt wird.

Aus der DE-OS 36 23 548 ist ein Verfahren bekannt, bei dem die Kühlluft über zwei ringförmige Austrittsspalte zugeführt wird. Die beiden Austrittsspalte sind mit getrennten Kühlluftzuführungseinrichtungen versehen, so daß die Luftdurchsätze durch die beiden Austrittsspalte unabhängig voneinander gesteuert werden können. Bei der zur Durchführung dieses Verfahrens vorgeschlagenen Vorrichtung ergibt sich jedoch in Umfangsrichtung der Austrittsspalte ein im wesentlichen gleichmäßiges Strömungsprofil.

In DE-A-26 58 518 wird ein Verfahren mit den im Oberbegriff des Anspruchs 1 angegebenen Merkmalen beschrieben. Bei diesem Verfahren wird das Dickenprofil der Folie mit Hilfe eines Kranzes von Korrekturluftdüsen geregelt, in denen der Kühlluftdurchsatz jeweils mit Hilfe eines Ventils steuerbar ist. Da jedoch die einzelnen Korrekturluftdüsen durch eine gemeinsame Ringleitung gespeist werden, kommt es beim Verstellen eines einzelnen Ventils zu einer Änderung der Druckverteilung in der Ringleitung und somit zu unerwünschten Rückwirkungen auf den Durchsatz durch die benachbarten Korrekturluftdüsen. Hierdurch wird die Regelung des Gesamtsystems erschwert.

Aus US-A-4 443 400 ist eine Vorrichtung bekannt, mit der in bestimmten Umfangsbereichen der Folie gezielt eine größere Foliendicke eingestellt werden kann. Zu diesem Zweck sind in den betreffenden Umfangsbereichen zusätzliche Luftdüsen vorgesehen, die jeweils über ein gemeinsames Ventil mit der Ringkammer des Kühlrings verbunden sind. Wenn das Ventil weiter geöffnet wird, nimmt der Gesamt-Strömungswiderstand in dem betreffenden Umfangsbereich ab, und über den Austrittsspalt des Kühlrings und über die zusätzlichen Düsen wird insgesamt eine größere Menge an Kühlluft abgegeben.

Aus US-A-4 209475 ist eine Vorrichtung bekannt, mit der das Dickenprofil dadurch gesteuert werden kann, daß die Breite des Austrittsspaltes des Kühlrings segmentweise verengt werden kann. Auch hier kommt es jedoch zu unerwünschten Wechselwirkungen zwischen benachbarten Segmenten, da sich bei der Verengung des Spaltes in einem Segment ein erhöhter Kühlluftdurchsatz in den benachbarten Segmenten ergibt.

Der Erfindung liegt die Aufgabe zugrunde, die Kühlluftströmung derart zu steuern, daß eine unabhängige, feinfühlige und schnelle Änderung der Kühlwirkung in den einzelnen Umfangsbereichen der Folienblase ermöglicht wird und extreme örtliche Schwankungen der Kühlwirkung vermieden werden.

Erfindungsgemäße Lösungen dieser Aufgabe sind in den unabhängigen Patentansprüchen angegeben.

Nach dem Grundgedanken der Erfindung ist wenigstens ein in einzelne Umfangssegmente unterteilter Kühlring vorgesehen, und die Kühlluftströmungen in den einzelnen Segmenten werden unabhängig voneinander gesteuert oder geregelt. Bei den vorgeschlagenen Lösungen wird dabei jeweils durch ergänzende Maßnahmen sichergestellt, daß sich die Kühlluftdurchsätze in den einzelnen Segmenten nicht gegenseitig beeinflussen und daß über den Umfang des Kühlrings keine sprunghaften Änderungen der Kühlwirkung auftreten.

Bei dem Gegenstand der Ansprüche 1,2 und 3 besteht das Lösungsprinzip darin, daß man mit Hilfe eines üblichen Kühlrings einen Haupt-Kühlluftstrom erzeugt, bei dem die Strömungsgeschwindigkeit der Luft auf dem gesamten Umfang der Folienblase möglichst einheitlich ist, und daß man gezielte örtliche Veränderungen der Kühlwirkung dadurch erzielt, daß über einen gesonderten Luftspalt entweder zusätzliche Kühlluft abgegeben oder ein Teil der Haupt-Kühlluft abgesaugt wird. Das sehr leistungsfähige und entsprechend träge Kühlluftgebläse zur Erzeugung des Haupt-Kühlluftstroms kann folglich mit einer konstanten Grundlast betrieben werden, während die Strömungen in den einzelnen Umfangsabschnitten des zusätzlichen Luftspaltes aufgrund des geringeren Durchsatzes rasch variiert werden können, so daß eine feinfühlige Steuerung der Umfangsverteilung der Gesamt-Kühlluftströmung ermöglicht wird. Durch den gleichmäßigen Haupt-Kühlluftstrom werden zudem die Durchsatzunterschiede zwischen den einzelnen Umfangsabschnitten des zusätzlichen Luftspaltes zu einem gewissen Grad verwischt, so daß übermäße Störungen des Gesamt-Kühlluftstromes und sprunghafte örtliche Änderungen der Kühlwirkung vermieden werden.

Da bei dem erfindungsgemäßen Verfahren keine spezielle Gestaltung des zur Erzeugung des Haupt-Kühlluftstromes dienenden Kühlringes erforderlich ist, läßt sich das Verfahren durch entsprechende Nachrüstung auch bei bestehenden Blasfolienanlagen verwirklichen.

Das Verfahren nach Anspruch 1 hat zudem den Vorteil, daß durch die Zugabe zusätzlicher Kühlluft die Kühlwirkung insgesamt verbessert und eine entsprechende Leistungssteigerung der Anlage ermöglicht wird. Die Steigerung der Kühlleistung wird nicht zuletzt dadurch erreicht, daß die Luftströmung durch das Einblasen der zusätzlichen Kühlluft in den Haupt-Kühlluftstrom stärker verwirbelt wird. Die zunächst turbulente, aufwärts gerichtete Haupt-Kühlluftströmung geht normalerweise aufgrund der abnehmenden Strömungsgeschwindigkeit nach oben hin allmählich in eine laminare Strömung über, so daß die Kühlwirkung nach oben hin stark abnimmt. Durch die Zugabe der zusätzlichen Kühlluft in geeigneter Höhe können erneut Turbulenzen erzeugt werden, so daß sich der wirksame Kühlbereich vergrößert. Die Änderung der Kühlwirkung wird somit ohne starke Änderung der Strömungsgeschwindigkeit und des Druckes erreicht, so daß eine stabile Blasenlage gewährleistet werden kann.

Die Steigerung der Kühlwirkung kann nicht nur durch Änderung des Durchsatzes der über den zusätzlichen Luftspalt zugeführten Kühlluft, sondern alternativ oder zusätzlich auch durch segmentweise Änderung des Anströmwinkels der Zusatzkühlluft gesteuert werden. Wahlweise kann auch die Position der einzelnen Segmente relativ zur Folienblase in vertikaler oder radialer Richtung variiert werden.

Eine weitere Steigerung der Empfindlichkeit bei der Steuerung der Umfangsverteilung der Kühlwirkung läßt sich dadurch erreichen, daß über den, zusätzlichen Luftspalt vorgekühlte Luft zugeführt wird. In diesem Fall läßt sich die Umfangsverteilung der Kühlwirkung auch durch segmentweise Änderung der Temperatur der Zusatzkühlluft steuern. Diese Lösung läßt sich konstruktiv beispielsweise dadurch verwirklichen, daß den einzelnen Segmenten des zusätzlichen Luftspaltes über Mischventile gekühlte und ungekühlte Luft in unterschiedlichen Anteilen zugeführt wird oder daß eine Kühlflüssigkeit in die Zusatzluftströmung eingesprüht wird.

Wahlweise können anstelle von Luft auch andere Kühlgase mit unterschiedlichen Wärmekapazitäten verwendet werden, so daß sich die Umfangsverteilung der Kühlwirkung auch über die Zusammensetzung des Gasgemisches steuern läßt.

Ein wesentlicher Vorteil der oben genannten Lösung besteht weiterhin darin, daß durch die getrennte Zufuhr der Kühlluft oder des Kühlgases zu den einzelnen Segmenten des zusätzlichen Luftspaltes bzw. durch die getrennten Absaugung der Luft in den einzelnen Segmenten eine gegenseitige Beeinflussung der Zusatz-Kühlluftströmungen vermieden wird. Hierdurch wird eine stabile Regelung des Dickenprofils in einem geschlossenen Regelkreis ermöglicht.

Bei der Lösung gemäß Ansprüchen 8, 9 und 12 wird an in Umfangsrichtung des Kühlrings verteilten Positionen an dem Austrittspalt oder stromaufwärts desselben ein Teil der Kühlluftströmung abgezweigt, und die Menge der abgezweigten Kühlluft wird mittels einstellbarer Leitschaufeln oder Leitkörper gesteuert.

Durch das Abzweigen eines Teils der Kühlluft läßt sich der Durchsatz am Austrittsspalt gezielt steuern, und es wird verhindert, daß sich vor der Abzweigungsstelle ein größerer Staudruck aufbaut und die Kühlluft auf benachbarte Umfangsbereiche ausweicht. Durch die Verränderung der Stellung der Leitschaufeln in einem Umfangsbereich wird somit der Durchsatz in den übrigen Umfangsbereichen nicht beeinflußt. Außerdem wird durch das Abzweigen der Kühlluft verhindert, daß sich die Strömungsgeschwindigkeit beim Umströmen der Leitschaufeln erhöht und es zu einer starken Wirbelbildung hinter den Leitschaufeln kommt. Durch die Einstellung der Leitschaufeln wird so eine einfache und genaue Steuerung der Umfangsverteilung des Kühlluftdurchsatzes und somit des Dickenprofils der Folienblase ermöglicht.

In einer bevorzugten Ausführungsform der Vorrichtung ist die obere Wand des Kühlrings mit einem Kranz von Austrittsöffnungen für die abgezweigte Kühlluft umgeben, und jeder einzelnen Austrittsöffnung ist eine Leitschaufel zugeordnet, die von oben in das Innere des Kühlrings ragt und einen Teil der Kühlluft in die Austrittsöffnung ablenkt Die Position der Leitschaufeln läßt sich in vertikaler Richtung verstellen, so daß sich die Menge der abgezweigten Kühlluft variieren läßt.

Bei dieser Ausführungsform ist es möglich, den Kühlring durch radiale Trennwände in einzelne Segmente zu unterteilen, so daß die Kühlluftströme bis zum Austrittsspalt oder bis zu einer Position kum vor dem Austrittsspalt voneinander getrennt sind. Auf diese Weise wird verhindert, daß sich die Durchsatzunterschiede zwischen den einzelnen Segmenten hinter den Leitschaufeln wieder ausgleichen, und die Austrittsöffnungen und die Leitschaufeln können relativ weit außen an dem Kühlring angeordnet werden, so daß mehr Raum für die Stellmechanismen zur Verfügung steht.

In einer anderen Ausführungsform werden die Leitschaufeln durch eine in Umfangsrichtung durchgehende Lippe aus flexiblem Material gebildet, deren Anstellwinkel sich in den einzelnen Umfangsbereichen mit Hilfe von Stößeln oder dergleichen einstellen läßt. Durch diese Bauweise wird eine konstruktive Vereinfachung erreicht, und es ist möglich, das Profil der Lippe derart stromlinienförmig zu gestalten, daß eine Verwirbelung der Kühlluft stromabwärts der Lippe vermieden wird. Darüber hinaus werden bei dieser Bauweise diskrete Übergänge in der Umfangsverteilung der Kühlluftströmung vermieden.

Die Verstellung der Leitschaufeln bzw. der Stößel kann manuell mit Hilfe von Stellschrauben oder dergleichen oder mit Hilfe geeigneter Antriebe, beispielsweise elektromagnetischer, pneumatischer oder piezoelektrischer Stellglieder erfolgen. Im letzteren Fall ist es möglich, den Kühlluftdurchsatz in den einzelnen Umfangsbereichen anhand der an verschiedenen Stellen des Umfangs der Folienblase gemessenen Foliendicke zu regeln. Da die im Rahmen der Regelung vorgenommenen Veränderungen an den Einstellungen der Leitschaufeln sich jeweils nur in dem betreffenden Umfangsbereich auswirken und keine nennenswerten Rückwirkungen auf die übrigen Umfangsbereiche haben, sind die Stellgrößen des Regelsystems, d.h., die Positionen der Leitschaufeln, weitgehend entkoppelt, so daß die Neigung des Regelsystems zu Schwingungen vermieden wird und sich eine stabile Regelung verwirklichen läßt.

Um gegenseitige Beeinflussungen der Kühlluftströme noch weiter zu reduzieren, kann es zweckmäßig sein, die Strömungswiderstände für die über die Austrittsöffnungen abgezweigten Luftströme so zu steuern, daß sie bei jeder Stellung der Leitschaufeln dem Strömungswiderstand des Austrittsspaltes des Kühlrings entsprechen. Auf diese Weise läßt sich erreichen, daß die Strömungs- und Druckverhältnisse in der Vertellerkammer am äußeren Umfang des Kühlrings von den Verstellbewegungen der Leitschaufeln praktisch völlig unbeeinflußt bleiben. Die Anpassung des Strömungswiderstandes kann mit Hilfe elektromagnetisch gesteuerter Dosierventile und dergleichen erfolgen. Wahlwelse ist es jedoch auch möglich, die Leitschaufel mechanisch mit einem Drosselteil zu koppeln, das die zugehörige Austrittsöffnung je nach Stellung der Leitschaufel mehr oder weniger verengt.

Die Kühlwirkung in den einzelnen Segmenten des Kühlrings läßt sich auch dadurch variieren, daß man durch Verengen oder Erweitem des Austrittsspaltes die Strömungsgeschwindigkeit der Kühlluft steuert. Bei gleichem Durchsatz führt eine Erhöhung der Strömungsgeschwindigkeit zu einer Verstärkung der Kühlwirkung. Dieses Prinzip liegt dem Gegenstand der Ansprüche 14 und 15 zugrunde. Ein annähernd konstanter Durchsatz wird dadurch erreicht, daß man die Änderung des Strömungswiderstands, die durch die Veränderung der Spaltbreite verursacht wird, durch eine mehr oder weniger starke Drosselung der Strömung stromaufwärts des Austrittsspaltes kompensiert. Diese Lösung hat den Vorteil, daß der Gesamt-Kühlluftdurchsatz in jedem Umfangssegment konstant bleibt. Auf diese Weise wird eine lokale Verminderung der Nachkühlung der Folienblase oberhalb der Einfriergrenze verhindert und sichergestellt, daß die Folientemperatur beim Flachlegen und Aufwickeln der Folie überall so weit abgenommen hat, daß die Folienlagen nicht miteinander verkleben. Aufgrund der gleichmäßig hohen Nachkühlwirkung kann die Länge der Nachkühlstrecke verringert und/ oder der Folienausstoß erhöht werden.

Wenn bei einer der zuvor beschriebenen Lösungen mit einem durch Trennwände in einzelne Segmente aufgeteilten Austrittsspalt gearbeitet wird, können sich die durch die Trennwände verursachten Störungen in der Kühlluftströmung in unterschiedlicher Weise auf die Kühlleistung aufwirken. Wie sich in Versuchen gezeigt hat, führen bei einem dicht an der Folienblase angeordneten Austrittsspalt die durch die Trennwände hervorgerufenen Wirbel zu einer Verstärkung der Kühlwirkung und somit zu einer Verdickung der Folie. Wenn dagegen der Austrittsspalt weiter von der Folienblase entfernt ist, überwiegen die Einflüsse der unterschledlichen Strömungsgeschwindigkeiten der laminaren Austrinttsströmung. Bei einheitlicher Breite des Austrittsspaltes ergibt sich in Umfangsrichtung ein quadratisches Geschwindigkeitsprofil, so daß die Geschwindigkeit in der Nähe der Trennwände geringer ist als in der Mitte der einzelnen Segmente. In diesem Fall kommt es daher im Bereich der Trennwände zu einer verringerten Kühlwirkung und zu einer Ausdünnung der Folie. In den Ansprüchen 16 bis 21 werden verschiedene Maßnahmen zur Vermeidung dieser Störeffekte vorgeschlagen.

Vorteilhafte Ausgestaltungen der Erfindung sind in den abhängigen Ansprüchen angegeben.

Im folgenden werden bevorzugte Ausführungsbeispiele der Erfindung anhand der Zeichnungen naher erläutert.

Es zeigen:

Fig. 1          einen schematischen Schnitt durch eine Blasfolienanlage mit einer erfiridungsgemäßen Kühlvorrichtung;

Fig. 2          eine Grundrißskizze der Kühlvorrichtung gemäß Fig. 1;

Fig. 3          einen Schnitt durch eine Kühlvorrichtung gemäß einem abgewandelten Ausführungsbeispiel der Erfindung:

Fig. 4(A) - (C)  Grafiken zur Veranschaulichung der Geschwindigkeitsverteilung der Kühlluftströmung in einzelnen Seamenten der Kühlvorrichtung;

Fig. 5          einen radialen Teilschnitt durch einen Kühlring einer Folienblasanlage gemäß einem anderen Ausführungsbeispiel:

Fig. 6          einen Teilschnitt einer an dem Kühlring angebrachten Kühlluft-Ableiteinrichtung gemäß einem abgewandelten Ausführungsbeispiel:

Fig. 7 bis 9    Schnitte durch Ableiteinrichtungen gemäß weiteren Ausführungsbeispielen der Erfindung;

Fig. 10         einen Schnitt durch einen Kühlring mit einer am Austrittsspalt angeordneten Ableiteinrichtung;

Fig. 11         eine Leitschaufel der Ableiteinrichtung gemäß Figur 10 in der Draufsicht:

Fig. 12         einen Schnitt durch ein anderes Ausführungsbeispiel einer am Austrittsspalt angeordneten Ableiteinrichtung;

Fig. 13         einen Schnitt durch einen Kühlring mit einer Einrichtung zur Veränderung der Strömungsgeschwindigkeit am Austrittsspalt;

Fig. 14         zwei Segmente des Austrittsspaltes in der Draufsicht;

Fig. 15         einen Schnitt durch einen Austrittsspalt gemäß einem weiteren Ausführungsbeispiel;

Fig. 16         einen vertikalen Schnitt durch den Kühlring unmittelbar stromaufwärts des Austrittsspaltes: und

Fig. 17         einen horizontalen Schnittdurch einen Austrittsspalt gemäß einem weiteren Ausführungsbeispiel.

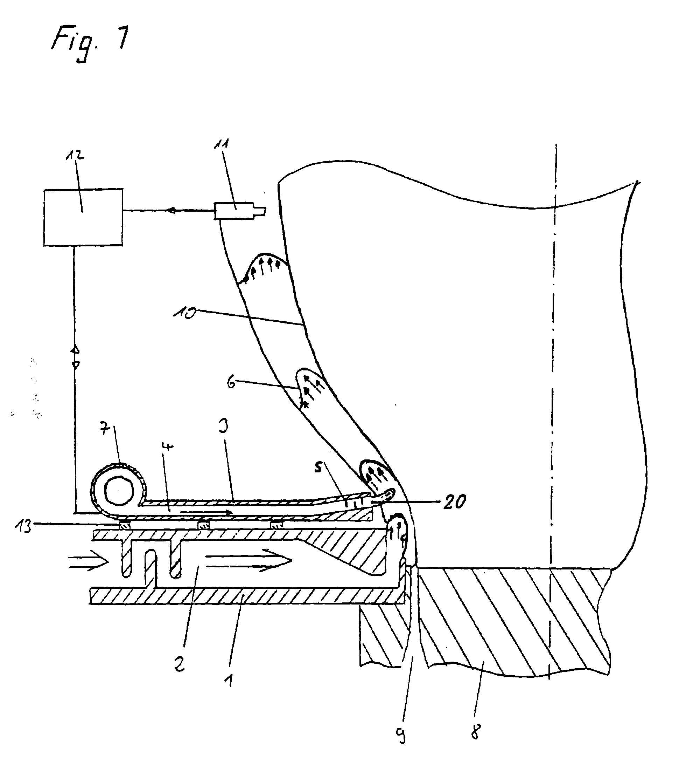

Bei einer Blasfolienanlage gemäß Figur 1 wird Schmelze 9 aus einem ringförmigen Austrittsspalt eines Werkzeugs 8 ausgepreßt, so daß eine schlauchförmige Folienblase 10 gebildet wird. Das Werkzeug ist von einem Kühiring 1 umgeben, in dem ein Haupt-Kühlluftstrom 2 gleichförmig über den Umfang verteilt und am radial inneren Ende über einen aufwärts gerichteten Austrittsspalt abgegeben wird, so daß die Folienblase 10 mit Kühlluft angeblasen wird. Die Geschwindigkeitsverteilung der Kühlluftströmung 6 am Umfang der Folienblase 10 ist in Figur 1 durch Pfeile und Verteilungskurven symbolisiert.

Auf der oberen Oberfläche des Kühlrings 1 ist auf Sockeln 13 ein Zusatzkühlring 3 montiert, durch den über einen im wesentlichen radial gerichteten Austrittsspalt 20 zusätzliche Kühlluft 4 in den Haupt-Kühlluftstrom 6 eingeblasen wird. Da die zusätzliche Kühlluft 4 eine relativ große Querkomponente in bezug auf den Haupt-Kühlluftstrom aufweist, werden in der Kühlluftströmung am Umfang der Folienblase 10 Turbulenzen erzeugt oder verstärkt, so daß die an der Blasenoberfläche erwärmte Luft schneller abgeführt und die Kühlwirkung gesteigert wird. Der durch die Sockel 13 gebildete Zwischenraum zwischen dem Kühlring 1 und dem Zusatzkühlring 3 ermöglicht es, daß an der Abrißkante am Austrittsspalt des Kühlringes 1 zusätzliche Luft angesaugt werden kann.

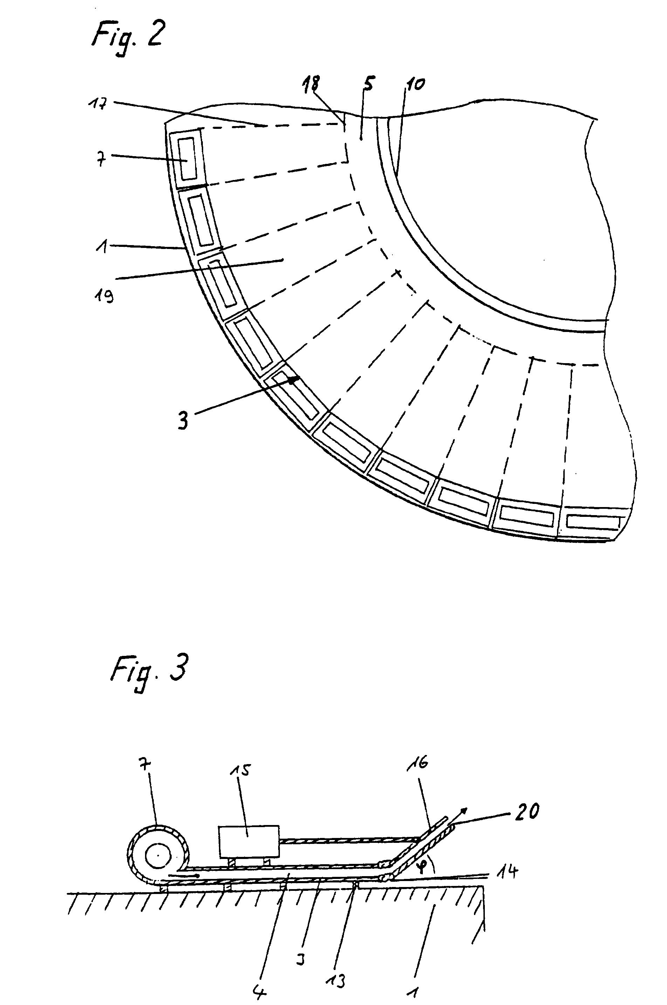

Gemäß Figur 2 ist der Zusatzkühlring 3 durch radiale Trennwände 17 in eine Vielzahl einzelner Segmente 19 unterteilt, und für jedes einzelne Segment ist ein gesondertes Radialgebläse 7 zur Erzeugung der Zusatz-Kühlluftströmung vorgesehen. Jedes der Radialgebläse 7 wird gesondert durch einen elektronisch kommutierten Elektromotor angetrieben, der eine genaue Steuerung der Drehzahl und somit des Kühlluft-Durchsatzes in dem betreffenden Segment gestattet.

Optische Dickensensoren 11 sind in Abstand oberhalb des Zusatzkühlringes 3 am Umfang der Folienblase 10 angeordnet. Mit Hilfe dieser Dickensensoren wird die Dicke der Folie in den einzelnen Umfangsbereichen der Folienblase optisch gemessen und ein entsprechendes Dickensignal an eine Steuereinheit 12 übermittelt. Durch die Steuereinheit 12 werden die einzelnen Radialgebläse 7 unabhängig voneinander angesteuert. Der Kühlluftdurchsatz in den einzelnen Segmenten 19 des Zusatzkühlringes 3 beeinflußt die Kühlwirkung und damit die Verstreckung der Folienblase 10 in den einzelnen Umfangsbereichen, und die sich so ergebende Foliendicke wird durch die Dickensensoren 11 als Rückkopplungssignal an die Steuereinheit 12 zurückgemeldet, so daß das Dickenprofil der Folienblase 10 in einem geschlossenen Kreis geregelt wird. Anstelle mehrerer Dickensensoren kann auch ein einziger in Umfangsrichtung bewegbarer Sensor vorgesehen sein.

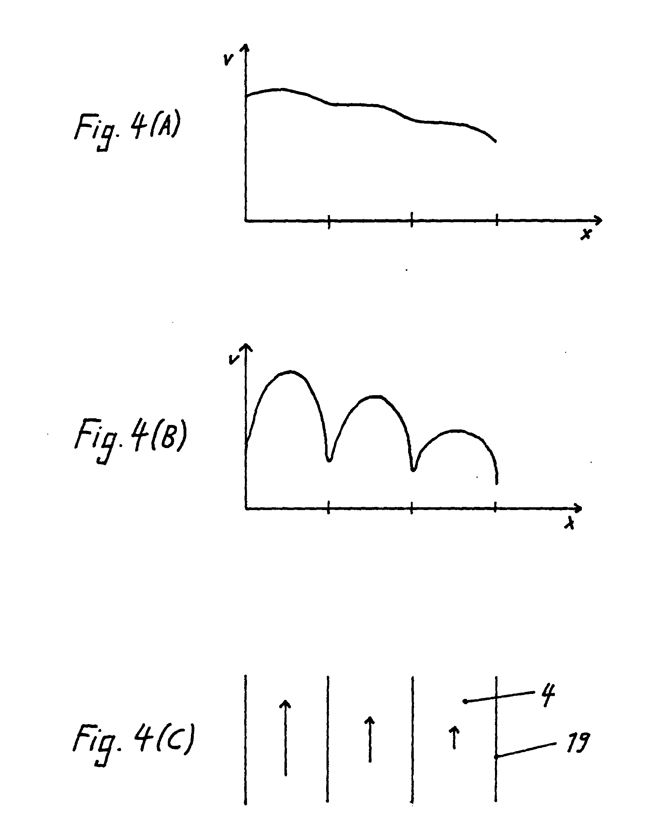

Die im Inneren des Zusatzkühlrings 3 angeordneten radialen Trennwände 17 reichen bis zu einer in Figur 2 mit dem Bezugzeichen 18 bezeichneten Kreislinie in unmittelbarer Nähe des Austrittsspaltes 20, so daß die mit Hilfe der einzelnen Radialgebläse 7 erzeugten Kühlluftströmungen sich nicht gegenseitig beeinflussen. Erst unmittelbar vor dem Austrittsspalt 20 vereinigen sich die Kühlluftströme 4 der einzelnen Segmente, und durch eine Staustufe 5, die durch labyrinthartig angeordnete Rippen gebildet wird, wird die Geschwindigkeitsverteilung der Kühlluftströmung geglättet. Die Wirkung der Staustufe 5 ist in Figuren 4(A) bis (C) illustriert. Figur 4(C) zeigt drei Segmente 19, in denen die Zusatz-Kühlluftströmungen 4 jeweils unterschiedliche Geschwindigkeiten aufweisen, wie durch Pfeile unterschiedlicher Länge veranschaulicht wird. Figur (B) zeigt die entsprechende Geschwindigkeitsverteilung der Kühlluftströmung in Umfangsrichtung x des Kühlrings vor der Staustufe 5. In Figur 4(A) ist die geglättete Geschwindigkeitsverteilung am Austrittsspalt 20 dargestellt. Durch geeignete Ansteuerung der Radialgebläse 7 läßt sich so die Strömungsgeschwindigkeit der Zusatz-Kühlluft 4 am Austrittsspalt 20 örtlich variieren, ohne daß abrupte Sprünge in der Geschwindigkeitsverteilung auftreten. Auf diese Weise wird eine gleichmäßige und genaue Regelung des Dickenprofils der Folienblase ermöglicht.

Figur 3 zeigt eine abgewandelte Ausführungsform des Zusatzkühlrings 3. Bei dieser Ausführungsform ist jedes Segment des Zusatzkühlrings mit einer gesonderten Spaltdüse 16 versehen, die über eine flexible Kupplung 14 mit dem Hauptteil des Zusatzkühlrings 3 verbunden ist. Mit Hilfe eines Stellgliedes 15 läßt sich der Anstellwinkel der Spaltdüse 16 und damit das Ausmaß der in dem Haupt-Kühlluftstrom erzeugten Turbulenzen variieren. Bei dieser Ausführungsform kann somit die Kühlwirkung allein oder zusätzlich mit Hilfe des Anstellwinkels der Spaltdüsen 16 der einzelnen Segmente beeinflußt werden.

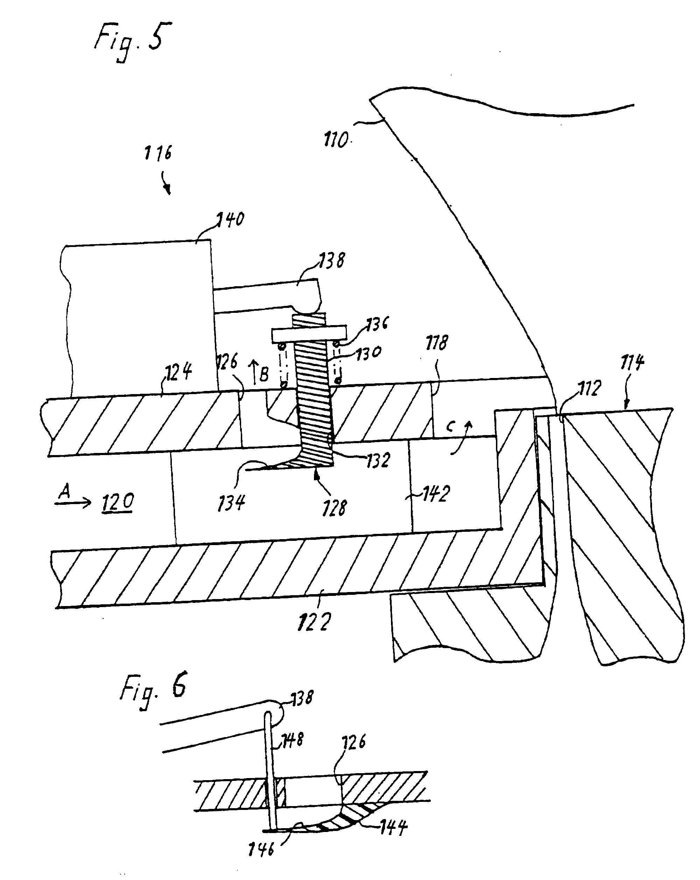

Anhand der Figuren 5 bis 12 soll nachfolgend eine weitere Ausführungsform der Erfindung erläutert werden.

Gemäß Figur 5 wird eine schlauchförmige Folienblase 110 aus einem Ringspalt 112 eines Extrusionswerkzeugs 114 extrudiert. Das Extrusionswerkzeug 114 ist von einem Kühlring 116 umgeben, durch den dem Umfang der Folienblase 110 über einen ringförmigen Austrittsspalt 118 Kühlluft zugeführt wird.

Der Kühlring 116 weist eine Ringkammer 120 auf, die durch eine untere Wand 122 und eine obere Wand 124 begrenzt wird. In dem in Figur 5 nicht gezeigten äußeren Umfangsbereich des Kühlrings steht die Ringkammer 120 über eine Staustufe mit einer ringförmigen Verteilerkammer in Verbindung, die an ein Gebläse angeschlossen ist. Die mit Hilfe des Gebläses zugeführte Kühlluft wird in der Verteilerkammer verteilt, so daß über die Staustufe eine auf dem gesamten Umfang im wesentlichen einheitliche Kühlluftströmung in die Ringkammer 120 eintritt, wie durch einen Pfeil A in Figur 5 veranschaulicht wird.

Die obere Wand 124 des Kühlrings 116 ist radial außerhalb des Austrittsspaltes 118 mit einem Kranz von einander eng benachbarten Austrittsöffnungen 126 versehen. Jeder Austrittsöffnung 126 ist eine Leitschaufel 128 zugeordnet, die sich mit einem Schaft 130 durch eine Führungsöffnung 132 in der oberen Wand 124 des Kühlrings erstreckt und am unteren Ende eine Leitkontur 134 aufweist, die fließend in das erweiterte untere Ende der Austrittsöffnung 126 übergeht. Der Schaft 130 der Leitschaufel ist durch eine Feder 136 nach oben vorgespannt und wird durch einen Hebel 138 eines Stellmechanismus beaufschlagt, der in einem Gehäuse 140 radial außerhalb der Austrittsöffnung 126 auf dem Kühlring angeordnet ist.

Die Leitschaufel 128 ist so geformt, daß sie in ihrer oberen Endstellung die Austrittsöffnung 126 verschließt, so daß die Kühlluft ungehindert zu dem Austrittsspalt 118 strömen kann. Wenn dagegen die Leitschaufel 128 durch den Hebel 138 abwärts gedrückt wird, So wird durch die Leitkontur 134 der Leitschaufel ein Teil der Kühlluft in die Austrittsöffnung 126 umgelenkt, so daß ein Teilstrom B von dem Haupt-Kühlluftstrom A abgezweigt wird. Somit gelangt nur der verbleibende Teilstrom C der Kühlluft zu dem Austrittsspalt 118, so daß sich am Austrittsspalt ein verringerter Kühlluftdurchsatz ergibt.

Die in Umfangsrichtung angeordneten Austrittsöffnungen 126 und Leitschaufeln 128 sind durch radial in der Ringkammer 120 angeordnete Trennwände 142 voneinander getrennt. Wenn zwei benachbarte Leitschaufeln in unterschiedliche Positionen eingestellt sind, so daß sich die Kühlluftdurchsätze stromabwärts der Leitschaufeln voneinander unterscheiden, so verhindert die Trennwand 142 eine vorzeitige Vereinigung der Teilströme C und einen Ausgleich der Durchsätze. Auf diese Weise wird eine Steuerung der Umfangsverteilung des Kühlluftdurchsatzes am Austrittsspalt 118 mit hoher Winkelauflösung ermöglicht, obgleich die Leitschaufeln 128 und die Austrittsöffnungen 126 relativ weit radial außerhalb des Austrittsspaltes angeordnet sind. Die Anordnung der Leitschaufeln in einer relativ weit außen gelegenen Position hat den Vorteil, daß mehr Platz für die zugehörigen Betätigungsmechanismen in dem Gehäuse 140 zur Verfügung steht und daß die ggf. durch die Leitschaufeln verursachten Störungen in der Kühlluftströmung noch vor dem Austrittsspalt 118 weitgehend abklingen können. Die Trennwände 142 sind relativ dünn und mit schneidenförmigen inneren und äußeren Enden ausgebildet, so daß sie die Kühlluftströmung möglichst wenig stören.

In einer modifizierten Ausführungsform sind die Trennwände 142 als von der oberen Wand 124 vorspringende Rippen ausgebildet, die nur etwa bis zur maximalen Eintauchtiefe der Leitschaufeln in das Innere der Ringkammer 120 hinein vorspringen, so daß der Kühlring nur im oberen Bereich segmentiert ist. Auf diese Weise läßt sich eine hohe Winkelauflösung bei der Steuerung des Kühlluftdurchsatzes erreichen, doch bewirkt der ununterbrochene Kühlluftstrom im unteren Bereich der Ringkammer 120 eine gewisse Verstetigung der Umfangsverteilung des Kühlluftstromes, so daß die störenden Einbüsse einer vollständigen Segmentierung vermieden werden.

Die Leitschaufeln 128 nehmen vorzugsweise den gesamten Zwischenraum zwischen den benachbarten Trennwänden 142 ein, so daß eine seitliche Umströmung der Leitschaufeln verhindert und die Entstehung von Wirbeln mit vertikaler Wirbelachse hinter den Leitschaufeln vermieden wird. Das untere stromabwärtige Ende der Leitschaufeln 128 ist im gezeigten Ausführungsbeispiel als Abrißkante ausgebildet, an der sich die Kühlluftströmung ablöst.

Wenn die Folienblase 110 in dem in der Schnittebene der Figur 5 liegenden Umfangsbereich eine zu große Dicke aufweist, so wird die Leitschaufel 128 mit Hilfe des Hebels 138 nach unten gedrückt, so daß der abgezweigte Teilstrom B vergrößert wird und der Durchsatz am Austrittsspalt entsprechend abnimmt. Hierdurch wird die Kühlwirkung in dem betreffenden Umfangsbereich verringert, so daß das Folienmaterial länger fließfähig bleibt und sich bei der Dehnung der Folienblase stärker verdünnt. Da die überschüssige Kühlluft durch die Austrittsöffnung 126 abgeleitet wird, führt diese Kühlluft nicht zu einer Erhöhung des Durchsatzes in den benachbarten Umfangsbereichen. Der Durchtrittsquerschnitt der Austrittsöffnung 126 ist so gewählt, daß der durch den Querschnitt des Austrittsspaltes 118, die Position der Leitschaufel 128 und den Querschnitt der Austrittsöffnung 126 bestimmte Gesamt-Strömungswiderstand sich bei einer Veränderung der Einstellung der Leitschaufel 128 möglichst wenig ändert. Der Druck in dem äußeren Bereich der Ringkammer 120, stromaufwärts der Trennwände 142, und in der vorgeschalteten Verteilerkammer wird somit durch die Änderungen der Einstellungen der Leitschaufeln praktisch nicht beeinflußt.

Wahlweise kann an jeder der Austrittsöffnungen 126 ein in Abhängigkeit von der Position der Leitschaufel 128 gesteuertes Dosierventil angeordnet sein, mit dem der Strömungswiderstand so an die Position der Leitschaufel angepaßt wird, daß der Gesamt-Strömungswiderstand mit größerer Genauigkeit konstant gehalten wird. In diesem Fall ist es möglich, die Strömungsgeschwindigkeit vor der Leitschaufel 128 mit Hilfe eines geheizten Thermistors zu messen und das Dosierventil in Abhängigkelt von der gemessenen Strömungsgeschwindigkeit so zu regeln, daß sich bei jeder Position der Leitschaufel der gewünschte Strömungswiderstand ergibt.

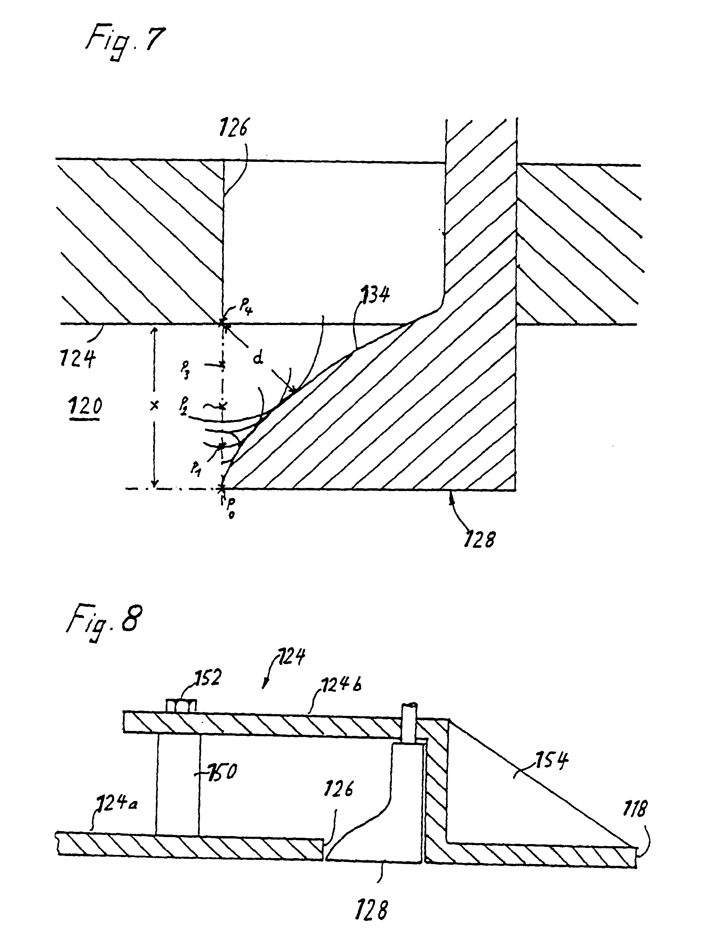

Figur 6 zeigt einen Teilschnitt durch den mit der Austrittsöffnung 126 versehenen Bereich der oberen Wand 124 des Kühlrings gemäß einem abgewandelten Ausführungsbeispiel der Erfindung. Bei dieserAusführungsform ist anstelle einzelner Leitschaufeln eine in Umfangsrichtung durchgehende ringförmige Lippe 144 aus flexiblem Material vorgesehen. Die Lippe 144 ist an der Innenfläche der oberen Wand 124 des Kühlrings angebracht und bildet eine Leitkontur 146, an die sich der dem Austrittsspalt 118 zugewandte Rand der Austrittsöffnung 126 kontinuierlich anschließt. Die Unterseite der Lippe 144 ist stromabwärts der Austrittsöffnung 126 stromlinienförmig ausgebildet, so daß die Kühlluftströmung zu dem Austrittsspalt nicht gestört wird. Das schneidenförmig ausgebildete stromaufwärtige Ende der Lippe 144 wird durch einen Stößel 148 beaufschlagt, der seinerseits mit dem Hebel 138 des Stellmechanismus verbunden ist. Die Lippe 144 ist aufgrund ihrer Eigenelastizität in die Schließstellung vorgespannt und läßt sich mit Hilfe des Stößels 148 elastisch auslenken, um einen Teil des Kühlluftstromes in die Austrittsöffnung 126 umzulenken.

Da bei diesem Ausführungsbeispiel außer der Austrittsöffnung 126 lediglich eine kleine Bohrung für den Stößel 148 in der oberen Wand 124 des Kühlrings erforderlich ist, wird eine übermäßige Schwächung der Wand vermieden, und die Austrittsöffnungen können eng benachbart zueinander angeordnet werden. Beispielsweise sind die Austrittsöffnungen 126 lediglich durch dünne Stege voneinander getrennt, so daß sie im wesentlichen wie ein durchgehender Ringspalt wirken. Die elastische Lippe 144 paßt sich in Umfangsrichtung fließend den unterschledlichen Stellungen der Stößel 148 an, so daß sprunghafte Änderungen der Kühlluftströmung am Umfang der Folienblase vermieden werden. Wahlweise kann die durchgehende flexible Lippe auch ein Profil aufweisen, das dem Profil der Leitschaufeln 128 gemäß Figur 5 ähnelt, wobei der Schaft jedoch kürzer ausgebildet ist und die obere Wand 124 des Kühlrings nicht durchsetzt, sondern höhenverstellbar in einer Nut der Wand 124 geführt ist. Die Wand 124 des Kühlrings weist in diesem Fall im Bereich der Nut lediglich kleine Durchbrüche für die Stößel zur Betätigung der Lippe auf.

Figur 7 zeigt eine Abwandlung des Ausführungsbeispiels nach Figur 5. Bei dem abgewandelten Ausführungsbeispiel gemäß Figur 7 hat die Leitschaufel 128 eine annähernd parabelförmige Leitkontur 134. Die Form der Leitkontur 134 ist so gewählt, daß zwischen der Leitkontur und der dieser gegenüberliegenden Kante der Austrittsöffnung 126 eine Drosselstelle gebildet wird, deren Breite α so von der Eintauchtiefe x der Leitschaufel 128 abhängt, daß der Gesamt-Strömungswiderstand von der Eintauchtiefe der Leitschaufel unabhängig ist. Die Form der Leitkontur 134 kann experimentell bestimmt werden, läßt sich jedoch näherungsweise auch theoretisch herleiten, wie nachfolgend kurz skizziert werden soll. Hierbei werden die folgenden Bezeichnungen verwendet.:

x: Eintauchteife der Leitschaufel
d(x): Breite der Drosselstelle
H: lichte Höhe der Ringkammer 120 zwischen den Innenflächen der Wände 122 und 124
P: Druck in der Ringkammer 120 stromaufwärts der Leitschaufel 128
P': Druck in der Ringkammer 120 unmittelbar strom-

abwärts der Leitschaufel

$Q_1$: Durchsatz durch die Drosselstelle und die Austrittsöffnung 126

$Q_2$: Durchsatz durch den Austrittsspalt 118

Q: Gesamt-Durchsatz

R: Strömungswiderstand des hinter der Leitschaufel gelegenen Teils der Ringkammer und des Austrittsspaltes 118

Bei der Strömung des Gases durch den engen Spalt oder eine Leitung ergibt sich näherungsweise eine parabelförmige Geschwindigkeitsverteilung. Die Geschwindigkeit ist in der Mitte des Spaltes am größten und fällt zu den Grenzflächen an den Rändern des Spaltes auf 0 ab. Den Strömungsdurchsatz erhält man durch Integration der Geschwindigkeitsverteilung über die Spaltbreite. Der Strömungsdurchsatz ist deshalb proportional zu der Druckdifferenz und zur dritten Potenz der Spaltbreite. Es geltenden somit die folgenden Beziehungen:

$$Q_1(x) = a_1 \, P \cdot d(x)^3 \qquad (1)$$

$$Q_2(x) = a_2 \, (P - P')(H - x)^3 \qquad (2)$$

$$Q_2(x) = P'(x)/R \qquad (3)$$

In diesen Gleichungen sind $a_1$, $a_2$ und R Systemkonstanten. Mit Hilfe der Gleichung (3) läßt sich P' aus Gleichung (2) eliminieren, so daß man einen Ausdruck für $Q_2$ als Funktion von x erhält.

Es ist nun zu fordern, daß bei konstantem Druck P der Gesamt-Strömungswiderstand Q unabhängig von der Eintauchtiefe x der Leitschaufel ist, also:

$$Q_1(x) + Q_2(x) = Q \qquad (4)$$

Einsetzen von Gleichungen (1) bis (3) in Gleichung (4) und Auflösen nach d liefert eine Funktion d(x), die die gewünschte Bedingung erfüllt. Die Leitkontur 134 läßt sich dann mit Hilfe des nachfolgend anhand der Figur 7 erläuterten Verfahrens konstruieren.

Auf einer Geraden, die durch die Punkte $p_0$ und $p_4$ in Figur 7 verläuft, werden verschiedene Punkte $p_1$, $p_2$, $p_3$ eingezeichnet. Um jeden der Punkte $p_i$ (i = 1,2,3,4) wird ein Kreis mit dem Radius $d(x_1)$ geschlagen, wobei $x_1$ der Abstand des Punktes $p_i$ zu dem Punkt $p_0$ ist. Die Hüllkurve der so erhaltenden Kreisbögen ist die gewünschte Leitkontur 134.

Figur 8 zeigt eine abgewandelte Konstruktion der oberen Wand 124 des Kühlrings. Diese Konstruktion gestattet es, die Austrittsöffnungen 126 zu einem durchgehenden Ringspalt zu verbinden, so daß die Umfangsverteilung der Kühlluftströmung nicht durch Stege zwischen den einzelnen Austrittsöffnungen 126 gestört wird. Die obere Wand 124 des Kühlrings wird gemäß Figur 8 durch einen äußeren Ring 124a und einen inneren Ring 124b mit einem stufenförmigen Profil gebildet. Der innere Ring 124b ist an seinem äußeren Umfangsrand mit dem äußeren Ring 124a verbolzt und wird durch Distanzstücke 150 in Abstand zu dem äußeren Ring 124a gehalten, so daß die aus der ringförmigen Austrittsöffnung 126 austretende Luft ungehindert entweichen kann. Die Leitschaufel 128 ist an der Stufe des inneren Ringes 124b geführt

Der innere Ring 24b begrenzt mit seinem inneren Rand den Austrittsspalt 118 und ist ausschließlich durch die Distanzstücke 150 und die Bolzen 152 an seinem äußeren Umfangsrand gehalten. Aufgrund der Ringstruktur und des ggf. durch Rippen 154 versteiften Stufenprofils kann der Innenrand des inneren Ringes 124b dennoch stabil und schwingungsfrei gehalten werden.

Die Leitschaufel 128 ist bei dieser Ausführungsform vorzugsweise als durchgehendes, ringförmiges Profilteil aus elastischem Material ausgebildet.

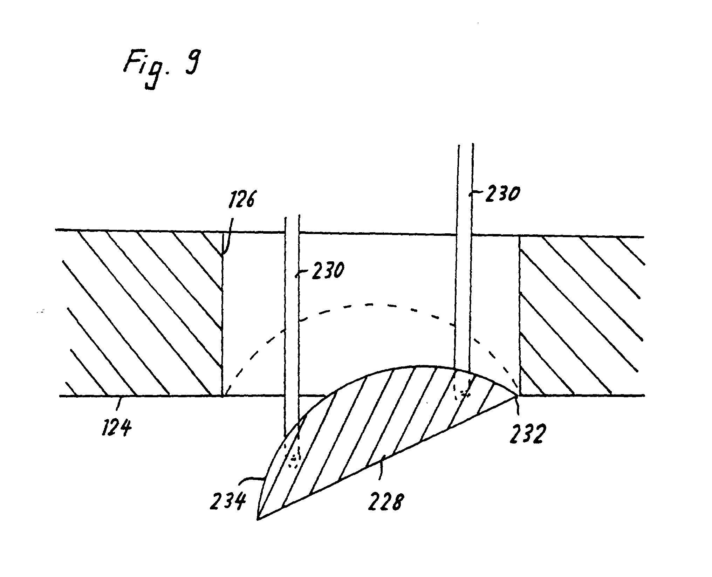

Gemäß Figur 9 ist eine Leitschaufel 228 mit Hilfe eines Gestänges 230 schwenkbar in der Austrittsöffnung 126 gehahlten. Die Schwenkachse 232 wird durch die in Strömungsrichtung gesehen hintere Kante der Leitschaufel 228 gebildet. Wahlweise kann die Leitschaufel dort auch mit Hilfe eines Scharniers an die obere Wand 124 des Kühlrings angelenkt sein. Wie sich in Experimenten gezeigt hat, kann bei dieser Ausführungsform der Druck stromaufwärts der Leitschaufeln weitgehend konstant gehalten werden, wenn die Leitschaufeln eine kreisförmige oder kreissegmentförmige Leitkontur 234 aufweisen, wie in Figur 9 gezeigt ist.

In einer weiteren nicht gezeigten Ausführungsform kann die Leitschaufel auch als in der Ringkammer des Kühlrings angeordneter Leitkörper ausgebildet sein, der um eine vertikale Achse drehbar ist und nach Art eines Ventilkükens mit zwei rechtwinklig zueinander verlaufenden Durchgängen versehen ist, von denen einer zum Austrittsspalt und der andere zu der Austrittsöffnung 126 führt. Je nach Winkelstellung des Leitkörpers wird so ein größerer oder kleinerer Anteil der Luft durch die Austrittsöffnung abgeleitet.

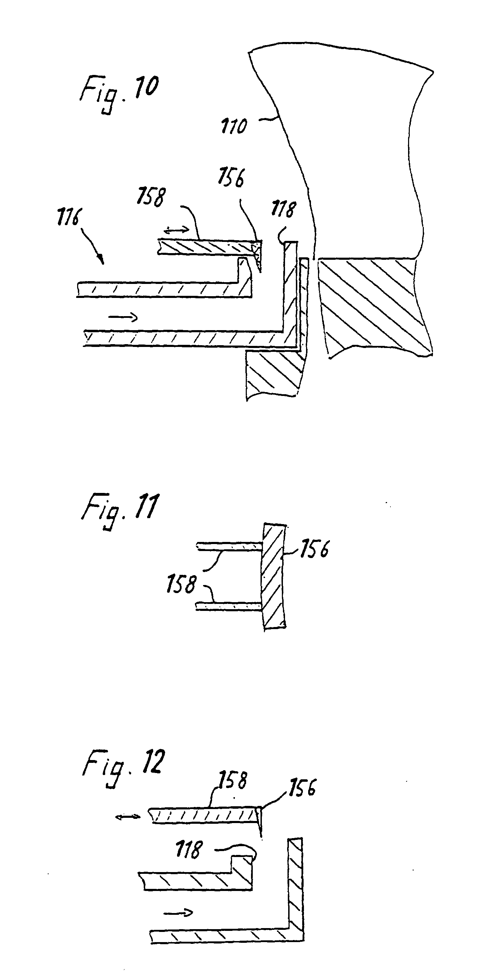

Während bei den zuvor beschriebenen Ausführungsbeispielen die Leitschaufel 128 bzw. 144 oder 228 stromaufwärts des Austrittsspaltes 118 in der Ringkammer 120 angeordnet ist, kann die Leitschaufel auch unmittelbar am Austrittsspalt 118 vorgesehen sein, wie in Figuren 10 bis 12 gezeigt wird.

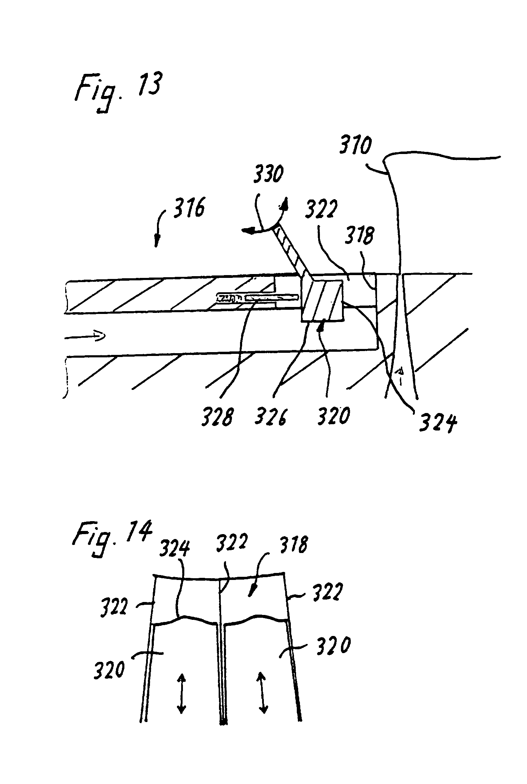

Gemäß Figur 10 ist eine im Querschnitt etwa keilförmige, radial verstellbare Leitschaufel 156 derart an stromlinienförmig profilierten Haltearmen 158 befestigt, daß sie mit ihrer Spitze in den Austrittsspalt 118 hineinragt. Figur 11 zeigt eine einzelne, der Krümmung des Austrittsspaltes angepaßte Leitschaufel 156 in der Draufsicht.

Der Ablenkwinkel der keilförmigen Leitschaufel 156 ist so gewählt, daß der mit Hilfe der Leitschaufel abgezweigte Teil der Kühlluftströmung so abgelenkt wird, daß er keine Kühlwirkung mehr auf die Folienblase 110 hat. Bei kleinerem Ablenkwinkel erfolgt keine Trennung der beiden Teilluftströme, sondern lediglich eine Strahlaufweitung. Auch in diesem Fall ergibt sich ein Einfluß auf die Kühlwirkung, da durch die Strahlaufweitung die Gesamt-Strömungsgeschwindigkeit verringert wird.

Abweichend von der in Figur 10 gezeigten Konstruktion, bei der die Radialposition der Leitschaufel 156 variiert wird, kann auch der Ablenkwinkel der Leitschaufel variiert werden. Die Leitschaufel kann anstelle des Keilprofils auch ein Stromlinienprofil aufweisen. Weiterhin ist es auch bei dem Ausführungsbeispiel nach Figur 10 denkbar, anstelle einzelner, segmentförmiger Leitschaufeln 156 einen durchgehenden flexiblen Ring mit einem geeigneten Leitprofil zu verwenden, so daß Störungen der Luftströmung an den unvermeidlichen Zwischenräumen zwischen den einzelnen Leitschaufel-Segmenten vermieden werden. Da die radialen Verstellwege der Haltearme 158 nur etwa 2 bis 3 mm betragen, kann sich der Leitschaufel-Ring diesen Verstellbewegungen durch elastische Dehnung ohne weiteres anpassen. Es ist zweckmäßig, den Leitschaufel-Ring in Umfangsrichtung stets unter einer gewissen Zugspannung zu halten, damit ein unkontrollierbares Auswölben des Ringes bei einer Verringerung des Radius vermieden wird.

Figur 12 zeigt eine abgewandelte Ausführungsform, bei der die Leitschaufel 156 oberhalb des Austrittsspaltes 118 angeordnet ist. Indem man die Höhe der Leitschaufel über dem Austritts spalt variiert, kann die Empfindlichkeit des Systems eingestellt werden.

Wenn die Leitschaufel 156 gemäß Figur 10 oder Figur 12 am Austrittsspalt angeordnet ist, wird eine Rückwirkung auf den Luftdurchsatz in benachbarten Umfangsbereichen des Kühlrings weitgehend vermieden. Zwar führt die Änderung der Position der Leitschaufeln zu einer Änderung des Strömungswiderstands, doch hat sich gezeigt, daß bei genügend kleinem Anstellwinkel der Leitschaufeln, beispielsweise bei einem Anstellwinkel von weniger als 20°, der Strömungswiderstand insgesamt so klein ist, daß keine nennenswerten Rückwirkungen auftreten.

Figur 13 zeigt einen Kühlring 316, bei dem ein etwas modifiziertes Lösungsprinzip verwirklicht ist. Die Breite des Austrittsspaltes 318, der die Folienblase 310 umgibt, läßt sich bei dieser Ausführungsform mit Hilfe eines Schiebers 320 variieren. Der Schieber 320 ist beweglich zwischen Trennwänden 322 gehalten, die den Austrittsspalt in einzelne Segmente unterteilen. Eine Stirnfläche 324 des Schiebers bestimmt die Breite des Austrittsspaltes 318, während die untere Oberfläche 326 des Schiebers den Querschnitt des Kühlluftkanals unmittelbar stromaufwärts des Austrittsspaltes begrenzt.

Der Schieber 320 ist durch einen Stößel 328 im Sinne einer Verengung des Austrittsspaltes vorgespannt und wird durch eine nur symbolisch dargestellte Steuerkurve 330 in einer nichtlinearen Bewegung geführt. Wenn die Kühlwirkung in dem betreffenden Segment verringert werden soll, wird der Schieber 320 längs der Steuerkurve 330 nach links und abwärts bewegt, so daß sich die Breite des Austrittsspaltes vergrößert, während der Kühlluftkanal durch die Fläche 326 geringfügig verengt wird. Die Steuerkurve 330 ist dabei so gewählt, daß sich der Gesamt-Strömungswiderstand - und damit der Kühlluftdurchsatz - bei der Bewegung des Schiebers 320 praktisch nicht ändert. Die Abnahme der Kühlwirkung wird dadurch erreicht, daß die Kühlluft den breiteren Austrittsspalt 318 mit geringerer Geschwindigkeit verläßt. Umgekehrt kann durch Bewegen des Schiebers 320 in der entgegengesetzten Richtung eine Verengung des Austrittsspaltes und damit eine Zunahme der Kühlluftgeschwindigkeit relativ zur Folienblase erreicht werden.

Bei dem in Figur 13 gezeigten Ausführungsbeispiel werden die Verengung und Verbreiterung des Austrittsspaltes 318 und die Drosselung der Kühlluftströmung in dem Kühlluftkanal durch ein einziges Bauteil, nämlich den Schieber 320 bewirkt Wahlweise können diese Funktionen jedoch auch von zwei getrennten Bauteilen übernommen werden, deren Antriebe mechanisch oder elektronisch miteinander gekoppelt sind. In diesem Fall kann das zur Drosselung der Strömung im Kühlluftkanal dienende Bauteil weiter stromaufwärts, also näher am äußeren Umfang des Kühlrings angeordnet sein.

Figur 14 zeigt den Austrittsspalt 318 eines nach dem gleichen Prinzip konstruierten Kühlringes in der Draufsicht. Die Stirnflächen 324 der Schieber 320 haben bei diesem Beispiel einen wellenförmigen Verlauf, so daß der Austrittsspalt 318 jeweils in der Mitte zwischen den Trennwänden 322 verengt wird. Da die Kühlluftströmung an den Oberflächen der Trennwände 322 gebremst wird, weist die Geschwindigkeitsverteilung der Kühlluft jeweils in der Mitte zwischen den Trennwänden ein Maximum auf, so daß sich dort bei einheitlicher Spalt breite eine größere Kühlwirkung ergäbe. Durch das Profil der Stirnflächen 324 wird in diesen Bereichen der Kühlluftdurchsatz verringert, während sich in der Nähe der Trennwände ein höherer Durchsatz ergibt. Hierdurch werden die großräumigen Durchsatz- und Geschwindigkeitsunterschiede ausgeglichen, und es verbleiben lediglich noch örtlich begrenzte Störungen in unmittelbarer Nähe der Trennwände 322. Diese Störungen gleichen sich jedoch in der Luftströmung unmittelbar oberhalb des Austrittsspaltes rasch aus, so daß sich an der Stelle, an der die Luftströmung die Folienblase beaufschlagt, eine gleichmäßige Durchsatz- und Geschwindigkeitsverteilung und somit eine gleichmäßige Kühlwirkung ergibt.

Die Schieber 320 haben zwischen den Trennwänden 322 ein gewisses Spiel, so daß die radiale Verstellbewegung ermöglicht wird.

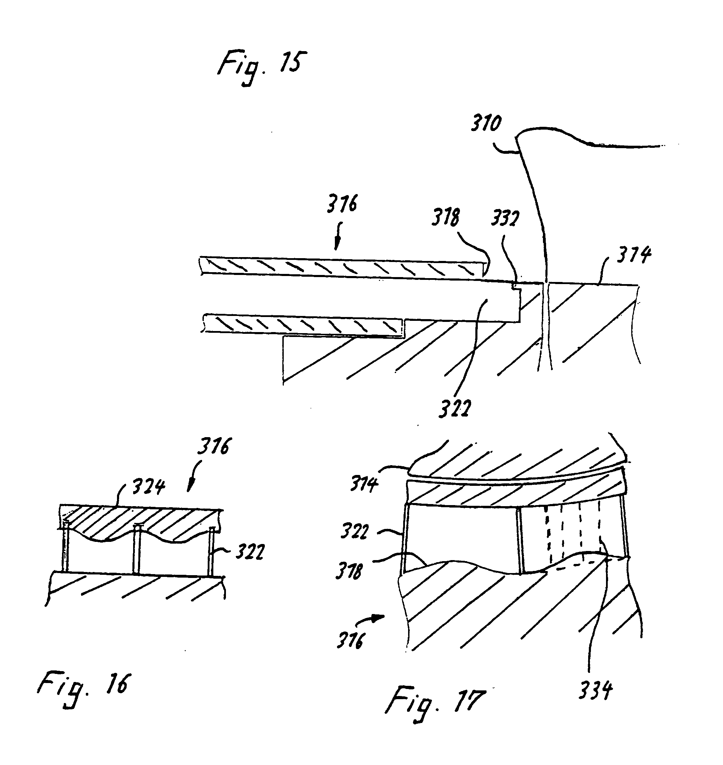

Figuren 15 bis 17 zeigen Maßnahmen, die im wesentlichen dem gleichen Zweck dienen wie die Anordnung gemäß Figur 14. In allen Fällen ist der Austrittsspalt 318 des Kühlrings durch radiale Trennwände 322 in Segmente unterteilt, so daß die Kühlluftströmung am Umfang der Folienblase durch nicht näher gezeigte Steuereinrichtungen segmentweise gesteuert werden kann,.

Gemäß Figur 15 ist am inneren Rand des Austrittsspaltes eine turbulenzerzeugende Störkante 332 vorgesehen. Durch die Wirkung dieser Störkante werden auf dem gesamten Umfang des Austrittsspaltes Turbulenzen erzeugt, die die unvermeidlich an den Trennwänden 322 entstehenden Turbulenzen überdekken, so daß sich ein gleichmäßiger Kühleffekt ergibt und die Störeinflüsse der Trennwände unterdrückt werden. Die durch die Störkante 323 hervorgerufenen Turbulenzen führen darüber hinaus zu einem besseren Luftaustausch an der Oberfläche der Folienblase, so daß die Kühlleistung insgesamt gesteigert wird.

In Figur 15 ist die Störkante 332 unmittelbar an dem den Austrittsspalt begrenzenden Teil des Werkzeugs 314 ausgebildet. Wenn bestehende Anlagen mit einem erfindungsgemäßen Kühlring nachgerüstet werden sollen, kann jedoch die Störkante auch an einem den inneren Rand des Austrittsspaltes bildenden Teil des Kühlrings 316 ausgebildet sein.

Den in Figuren 16 und 17 gezeigten Ausführungsformen liegt das bereits im Zusammenhang mit Figur 14 erläuterte Prinzip zugrunde. In Figur 16 ist die Unterseite der oberen Wand 324 des Kühlrings 316 wellenförmig gestaltet, während in Figur 17 der äußere Umfangsrand des Austrittsspaltes 318 ein wellenförmiges Profil aufweist.

Die Geschwindigkeit der Kühlluft in den durch die Trennwände 322 voneinander abgegrenzten Segmenten des Austrittsspaltes 318 kann alternativ auch dadurch vereinheitlicht werden, daß radiale Stege 334 zwischen den Trennwänden 322 angeordnet werden, wie in Figur 17 gestrichelt angedeutet ist. Die Stege bewirken eine Verminderung der Strömungsgeschwindigkeit im Inneren der Segmente des Austrittsspaltes, so daß sich eine in Umfangsrichtung gleichmäßige Geschwindigkeitsverteilung ergibt. Die durch die Stege und die Trennwände hervorgerufenen geringfügigen Störungen gleichen sich bereits dicht oberhalb des Austrittsspaltes aus.

**Patentansprüche**

1. Verfahren zur Regelung des Dickenprofils einer Folienblase (10) in einer Folienblasvorrichtung mit einem die Folienblase (10) umgebenden Haupt-Kühlring (1), und einem Zusatzkühlring (3), der eine von dem Haupt-Kühlring (1) getrennte Ringdüse bildet, deren Austrittsöffnungen (20) in den von dem Haupt-Kühlring (1) abgegebenen Kühlgasstrom (2) münden, bei dem man:

   a) über den Haupt-Kühlring (1) einen über den Umfang der Folienblase (10) einheitlichen Kühlgasstrom (6) zuführt,

   b) getrennte Kühlgasströme (4) in verschiedenen Umfangsabschnitten der Folienblase (10) über getrennte Segmente (16;19) des Zusatzkühlrings (3) zuführt,

   c) die Foliendicke oberhalb der Einfriergrenze in verschiedenen Umfangsbereichen abtastet und

   d) eine die Kühlleistung der über den Zusatzkühlring (3) zugeführten Kühlgasströme bestimmende Größe segmentweise in Abhängigkeit von den gemessenen Foliendicken regelt,

   **dadurch gekennzeichnet, daß** als Regelgröße die Förderleistung von gesonderten Kühlgas-Fördermitteln (7) für jedes einzelne Segment des Zusatzkühlrings (3) verwendet wird.

2. Verfahren zur Regelung des Dickenprofils einer Folienblase (10) bei der Blasfolienherstellung, bei dem mit einem Haupt-Kühlring (1) ein über den Umfang der Folienblase (10) einheitlicher Kühlgasstrom erzeugt wird und die von dem Haupt-Kühlring abgegebene Kühlgasströmung (6) in einzelnen Umfangsbereichen der Folienblase modifiziert wird, **dadurch gekennzeichnet, daß** man einen Teil des zugeführten Kühlgases am Umfang der Folienblase absaugt und die Saugleistung in einzelnen Umfangsbereichen der Folienblase getrennt steuert oder regelt.

3. Vorrichtung zur Durchführung des Verfahrens nach Anspruch 1 , mit einem die Folienblase (10) umgebenden unsegmentierten Haupt-Kühlring (1), einem Zusatzkühlring (3), der eine von dem Haupt-Kühlring (1) getrennte, in einzelne Segmente (16; 19) unterteilte Ringdüse bildet, deren Austrittsspalt (20) in den von dem Haupt-Kühlring abgegebenen Kühlgasstrom (2) mündet, und mit Einrichtungen zur Steuerung des Kühlgasstromes in den einzelnen Segmenten, **dadurch gekennzeichnet, daß** die Einrichtungen zur Steuerung des Kühlgasstromes getrennte Fördermittel (7) für jedes einzelne Segment umfassen.

4. Vorrichtung nach Anspruch 3, **dadurch gekennzeichnet, daß** der Zusatzkühlring (3) eine durch radiale Trennwände (17) unterteilte Ringkammer bildet, und daß die Trennwände (17) am inneren Rand der Ringkammer in einer Position (18) in Abstand zu dem in Umfangsrichtung durchgehenden Austrittsspalt (20) enden.

5. Vorrichtung nach Anspruch 4, **dadurch gekennzeichnet, daß** zwischen den inneren Enden der Trennwände (17) und dem Austrittsspalt (20) eine allen Segmenten gemeinsame Staustufe (5) angeordnet ist.

6. Vorrichtung nach Anspruch 3, **dadurch gekennzeichnet, daß** die einzelnen Segmente des Zusatzkühlrings (3) durch getrennte Spaltdüsen (16) gebildet werden, die jeweils einen Abschnitt des Austrittsspaltes (20) bilden und deren Anstellwinkel (φ) relativ zu dem Haupt-Kühlgasstrom (2) verstellbar ist.

7. Vorrichtung nach einem der Ansprüche 3 bis 6, **dadurch gekennzeichnet, daß** der Zusatzkühlring (3) auf einzelnen Sockeln (13) in Abstand oberhalb des Haupt-Kühlrings (1) montiert ist.

8. Verfahren zur Herstellung von Blasfolien in einer Folienblasanlage mit einem die Folienblase (110) umgebenden, einen ringförmigen Austrittsspalt (118) für Kühlluft aufweisenden Kühlring (116), bei dem zur Korrektur des Dickenprofils der Folienblase der Kühlluft-Durchsatz in den einzelnen Umfangsbereichen des Kühlrings (116) gesteuert wird, **dadurch gekennzeichnet, daß** man zur gesteuerten Verringerung der Kühlluftströmung an der Folienblase (110) an in Umfangsrichtung des Kühlrings verteilten Positionen jeweils einen Teil (B) der Kühlluft abzweigt, indem man die Luft mittels einstellbarer Leitkörper oder Leitschaufeln (128;144;156;228) umlenkt, und daß man den Gesamt-Strömungswiderstand für die abgezweigte und die nicht abgezweigte Kühlluft in dem betreffenden Umfangssegment unabhängig von der Position der Leitschaufeln konstant hält.

9. Vorrichtung zur Durchführung des Verfahrens nach Anspruch 8, **dadurch gekennzeichnet, daß** der Kühlring (116) radial außerhalb des Austrittsspaltes (118) einen Kranz von Austrittsöffnungen (126) aufweist und daß einstellbare Leitkörper oder Leitschaufeln (128;144;228) derart in der Kühlluftströmung (A) im Inneren des Kühlrings (116) angeordnet sind, daß sie einen Teil (B) des Kühlluftstromes an die Austrittsöffnungen (126) umlenken und bei ihrer Verstellung die Durchtrittsquerschnitte zu den Austrittsöffnungen und zum Austrittsspalt so verändern, daß der Gesamt-Strömungswiderstand im wesentlichen gleich bleibt.

10. Vorrichtung nach Anspruch 9, **dadurch gekennzeichnet, daß** jeder Austrittsöffnung (126) eine gesonderte Leitschaufel (128) zugeordnet ist, die verschiebbar in einer Öffnung (32) der mit der Austrittsöffnung versehenen Wand (124) des Kühlrings geführt ist.

11. Vorrichtung nach Anspruch 10, **dadurch gekennzeichnet, daß** die Leitschaufeln (228) als Klappen ausgebildet sind, die um ihr in Strömungsrichtung hinteres Ende (232) aus der Ebene der Wand des Kühlrings heraus in das Innere des Kühlrings schwenkbar sind und auf ihrer der Austrittsöffnung (126) zugewandten Seite eine im Querschnitt halbkreisförmige Leitkontur (234) aufweisen.

12. Vorrichtung zur Durchführung des Verfahrens nach Anspruch 8, **gekennzeichnet durch** in der Kühlluftströmung an oder stromabwärts des Austrittsspaltes (118) angeordnete Leitschaufeln (156), deren Radialposition und/ oder Anstellwinkel steuerbar ist.

13. Vorrichtung nach Anspruch 9 oder 12, **dadurch gekennzeichnet, daß** die Leitschaufeln durch einen in Umfangsrichtung des Kühlrings (116) umlaufenden Ring (144) aus flexiblem Material gebildet werden, dessen Position und/oder Anstellwinkel mittels in Umfangsrichtung verteilter Stößel (148) oder Haltearme (158) verstellbar ist.

14. Verfahren zur Herstellung von Blasfolien in einer Folienblasanlage mit einem die Folienblase (310) umgebenden, einen ringförmigen Austrittsspalt (318) für Kühlluft aufweisenden Kühlring (316), bei dem zur Korrektur des Dickenprofils der Folienblase die Kühlluft-Strömung in den einzelnen Umfangsbereichen des Kühlrings (316) durch segmentweises Verengen oder Erweitern des Austrittsspaltes (318) gesteuert wird, **dadurch gekennzeichnet, daß** man die durch die Änderung der Spaltbreite bedingte Änderung des Strömungswiderstands zumindest teilweise kompensiert, indem man die Kühlluftströmung in den betreffenden Segmenten stromaufwärts des Austrittsspaltes in Abhängigkeit von der Spaltbreite drosselt.

15. Vorrichtung zur Durchführung des Verfahrens nach Anspruch 14, bei der der äußere Rand des Austrittsspaltes (318) durch radial verstellbare Schieber (320) begrenzt wird, **dadurch gekennzeichnet, daß** jedem Schieber eine stromaufwärts des Austrittsspaltes in der Kühlluftströmung angeordnete Drosseleinrichtung (326) zugeordnet ist, die antriebsmäßig mit dem Schieber gekoppelt ist und im Sinne einer stärkeren Drosselung der Kühlluftströmung betätigt wird, wenn der Schieber in Richtung größerer Spaltbreite bewegt wird.

16. Vorrichtung nach Anspruch 15, **dadurch gekenn-**

**zeichnet, daß** der Austrittsspalt (318) durch radiale Trennwände (322) in einzelne Segmente unterteilt ist und daß die den Austrittsspalt begrenzende Oberfläche (324) des Schiebers im Bereich zwischen den Trennwänden derart vorgewölbt ist, daß das Segment des Austrittspaltes in der Mitte eine geringere Breite als in der Nähe der Trennwände aufweist.

17. Vorrichtung nach Anspruch 3, 9 oder 15 **dadurch gekennzeichnet, daß** der Austrittsspalt durch radiale Trennwände in einzelne Segmente unterteilt und mit Mitteln zur Vergleichmäßigung der Kühlluftströmung versehen ist.

18. Vorrichtung nach Anspruch 17, **dadurch gekennzeichnet, daß** die Mittel zur Vergleichmäßigung der Kühlluftströmung durch eine turbulenzerzeugende Störkante (332) am inneren Rand des Austrittsspaltes gebildet werden.

19. Vorrichtung nach Anspruch 17, **dadurch gekennzeichnet, daß** jedes Segment des Austrittsspaltes durch radiale Stege (334) in kleinere Teilsegmente unterteilt ist.

**Claims**

1. Process for adjusting the thickness profile of a bubble film (10) in a bubble film device having a main cooling ring (1), which surrounds the bubble film (10), and an auxiliary cooling ring (3) which forms an annular nozzle which is separated from the main cooling ring (1) and of which the outlet openings (20) open out into the cooling gas stream (2) discharged from the main cooling ring (1), in the case of which process:

   a) a cooling gas stream (6) which is uniform over the periphery of the bubble film (10) is delivered via the main cooling ring (1),

   b) separate cooling gas streams (4) are delivered in different peripheral sections of the bubble film (10) via separate segments (16; 19) of the auxiliary cooling ring (3),

   c) the film thickness above the freezing-in limit is scanned in various peripheral areas, and

   d) a value determining the cooling output of the cooling gas streams delivered via the auxiliary cooling ring (3) is adjusted in segments as a function of the film thicknesses measured,

   **characterised in that** the delivery output of separate cooling gas delivery means (7) for each individual segment of the auxiliary cooling ring (3) is used as the regulating value.

2. Process for adjusting the thickness profile of a bubble film (10) in bubble film production, in which a cooling gas stream which is uniform over the periphery of the bubble film (10) is generated by a main cooling ring (1), and the cooling gas stream (6) discharged by the main cooling ring is modified in individual peripheral areas of the bubble film, **characterised in that** part of the delivered cooling gas is drawn off at the periphery of the bubble film and the suction capacity is controlled or adjusted separately in individual peripheral areas of the bubble film.

3. Device for performing the process according to claim 1, with an unsegmented main cooling ring (1) surrounding the bubble film (10), an auxiliary cooling ring (3), which forms an annular nozzle which is separated from the main cooling ring (1), which is divided into individual segments (16; 19), and of which the outlet gap (20) opens into the cooling gas stream (2) discharged by the main cooling ring, and with devices for controlling the cooling gas stream in the individual segments, **characterised in that** the devices for controlling the cooling gas stream comprise separate delivery means (7) for each individual segment.

4. Device according to Claim 3, **characterised in that** the auxiliary cooling ring (3) forms an annular chamber divided by radial partitions (17), and **in that** the partitions (17) terminate at the inner edge of the annular chamber in a position (18) at a spacing from the outlet gap (20) which is continuous in the peripheral direction.

5. Device according to Claim 4, **characterised in that** a baffle stage (5) which is common to all segments is disposed between the inner ends of the partitions (17) and the outlet gap (20).

6. Device according to Claim 3, **characterised in that** the individual segments of the auxiliary cooling ring (3) are formed by separate slotted nozzles (16) which in each case form a section of the outlet gap (20) and of which the angle of incidence ($\varphi$) is adjustable relative to the main cooling gas stream (2).

7. Device according to any one of Claims 3 to 6, **characterised in that** the auxiliary cooling ring (3) is mounted on individual bases (13) at a spacing above the main cooling ring (1).

8. Process for producing bubble films in a bubble film plant with a cooling ring (116), which surrounds the bubble film (110) and which comprises an annular outlet gap (118) for cooling air, in which process the cooling air throughput in the individual peripheral areas of the cooling ring (116) is controlled in order to correct the thickness profile of the bubble film, **characterised in that** a part (B) of the cooling air is branched off at positions distributed in the peripheral direction of the cooling ring, in order to reduce the cooling air stream on the bubble film (110) in a controlled fashion, as a result of the air being deflected by means of adjustable guide members or guide blades (128; 144; 156; 228), and **in that** the total flow resistance for the branched-off and non-branched-off cooling air is kept constant in the respective peripheral segment independently of the position of the guide blades.

9. Device for performing the process according to Claim 8, **characterised in that** radially outside the outlet gap (118) the cooling ring (116) comprises a ring of outlet openings (126), and **in that** adjustable guide members or guide blades (128; 144; 228) are disposed in the cooling air stream (A) inside the cooling ring (116) in such a manner that they deflect part (B) of the cooling air stream to the outlet openings (126) and, when they are adjusted, alter the passage cross-sections to the outlet openings and to the outlet gap in such a way that the total flow resistance remains substantially the same.

10. Device according to Claim 9, **characterised in that** a separate guide blade (128) is associated with each outlet opening (126) and is displaceably guided in an opening (32) of the wall (124) of the cooling ring provided with the outlet opening.

11. Device according to Claim 10, **characterised in that** the guide blades (228) are in the form of flaps which can be pivoted about their ends (232) which are at the rear in the direction of flow, out of the plane of the cooling ring wall into the interior of the cooling ring, and comprise on their sides facing the outlet opening (126) a guide contour (234) which is semi-circular in cross-section.

12. Device for performing the process according to Claim 8, **characterised by** guide blades (156) which are disposed in the cooling air stream at or downstream of the outlet gap (118) and of which the radial position and/or angle of incidence is controllable.

13. Device according to Claim 9 or Claim 12, **characterised in that** the guide blades are formed by a ring (144) of flexible material which passes around in the peripheral direction of the cooling ring (116) and of which the position and/or angle of incidence can be adjusted by means of pushrods (148) or retaining arms (158) distributed in the peripheral direction.

14. Process for producing bubble film in a bubble film plant and having a cooling ring (316) which surrounds the bubble film (310) and which comprises an annular outlet gap (318) for cooling air, in the case of which process the cooling air stream in the individual peripheral areas of the cooling ring (316) is controlled as a result of the outlet gap (318) being narrowed or widened in segments in order to correct the thickness profile of the bubble film, characterised in that the alteration of the flow resistance caused by the alteration of the gap width is at least partially compensated for in that the cooling air stream in the relevant segments is throttled upstream of the outlet gap in dependence on the width of the gap.

15. Device for performing the process according to Claim 14, in which the outer edge of the outlet gap (318) is delimited by radially adjustable slides (320), **characterised in that** a throttle device (326), which is disposed upstream of the outlet gap in the cooling air stream, which is coupled for drive with the slide and which is activated in order to increase the throttling effect of the cooling air stream when the slide is moved in the direction of a larger gap width, is associated with each slide.

16. Device according to Claim 15, **characterised in that** the outlet gap (318) is divided into individual segments by radial partitions (322), and **in that** the surface (324) of the slide delimiting the outlet gap is curved forwards in the area between the partitions in such a way that the segment of the outlet gap is narrower in the centre than in the vicinity of the partitions.

17. Device according to Claim 3, Claim 9 or Claim 15, **characterised in that** the outlet gap is divided into individual segments by radial partitions and is provided with means for equalising the cooling air stream.

18. Device according to Claim 17, **characterised in that** the means for equalising the cooling air stream are formed by a turbulence-generating spoiler (332) at the inner edge of the outlet gap.

19. Device according to Claim 17, **characterised in that** each segment of the outlet gap is divided into smaller partial segments by means of radial webs (334).

## Revendications

1. Procédé pour régler le profil d'épaisseur d'une feuille soufflée (10) dans un dispositif d'extrusion-soufflage de feuilles, comprenant un anneau de refroidissement principal (1) qui entoure la feuille soufflée (10) et un anneau de refroidissement supplémentaire (3) qui forme une filière annulaire séparée de l'anneau de refroidissement principal (1), dont les orifices de sortie (20) débouchent dans le courant de gaz de refroidissement (2) fourni par l'anneau de refroidis-sement principal (1), dans lequel

a) un courant de gaz de refroidissement (6) homogène sur la périphérie de la feuille soufflée (10) est amené par l'intermédiaire de l'anneau de refroidissement principal (1),
b) des courants de gaz de refroidissement (4) séparés sont amenés dans différentes sections périphériques de la feuille soufflée (10) par l'intermédiaire de segments (16; 19) séparés de l'anneau de refroidissement supplémentaire (3),
c) l'épaisseur de la feuille est explorée, au-delà de la limite de solidification, dans différentes sections périphériques, et dans lequel
d) une grandeur qui détermine la puissance frigorifique des courants de gaz de refroidissement amenés par l'intermédiaire de l'anneau de refroidissement supplémentaire (3), est réglée segment par segment en fonction des épaisseurs de feuille mesurées,

**caractérisé en ce qu'**on utilise le débit des moyens d'acheminement de gaz de refroidissement (7) séparés pour chaque segment individuel de l'anneau de refroidissement supplémentaire (3),

2. Procédé pour régler le profil d'épaisseur d'une feuille soufflée (10) lors de la fabrication de feuilles soufflées, par lequel un courant de gaz de refroidissement homogène sur la périphérie de la feuille soufflée (10) est produit au moyen d'un anneau de refroidissement principal (1) et par lequel le courant de gaz de refroidissement (6) débité par l'anneau de refroidissement principal est modifié dans certaines sections périphériques de la feuille soufflée, **caractérisé en ce qu'**une partie du gaz de refroidissement amené est aspirée sur la périphérie de la feuille soufflée et que le volume aspiré est commandé ou réglé séparément dans les différentes sections périphériques de la feuille soufflée.

3. Dispositif pour la mise en oeuvre du procédé selon la revendication 1, comprenant un anneau de refroidissement principal (1) non segmenté qui entoure la feuille soufflée (10), un anneau de refroidissement supplémentaire (3) qui forme une filière annulaire séparée de l'anneau de refroidissement principal (1) et divisée en différents segments (16; 19), dont la fente de sortie (20) débouche dans le courant de gaz de refroidissement (2) débité par l'anneau de refroidissement principal, et des dispositifs pour la commande du courant de gaz de refroidissement dans les divers segments, **caractérisé en ce que** les dispositifs pour la commande du courant de gaz de refroidissement comprennent des moyens d'acheminement (7) séparés pour chaque segment.

4. Dispositif selon la revendication 3, **caractérisé en ce que** l'anneau de refroidissement supplémentaire (3) forme une chambre annulaire divisée par des cloisons (17) radiales, et que les cloisons (17) se terminent au bord intérieur de la chambre annulaire dans une position (18) à distance de la fente de sortie (20) continue dans le sens circonférentiel.

5. Dispositif selon la revendication 4, **caractérisé en ce qu'**entre les extrémités intérieures des cloisons (17) et la fente de sortie (20) est disposée une zone de retenue (5).

6. Dispositif selon la revendication 3, **caractérisé en ce que** les différents segments de l'anneau de refroidissement supplémentaire (3) sont formés par des filières plates (16) séparées qui constituent chacune une section de la fente de sortie (20) et dont l'angle d'attaque ( ) peut être réglé par rapport au courant de refroidissement principal (2).

7. Dispositif selon l'une des revendications 3 à 6, **caractérisé en ce que** l'anneau de refroidissement supplémentaire (3) est monté sur des socles individuels (13) à distance au-dessus de l'anneau de refroidissement principal (1).

8. Procédé de fabrication de feuilles soufflées dans une installation d'extrusion-soufflage de feuilles comprenant un anneau de refroidissement (116) qui entoure la feuille soufflée (110) et comporte une fente de sortie (118) annulaire pour l'air de refroidissement, par lequel le débit d'air de refroidissement est commandé dans les différentes sections périphériques de l'anneau de refroidissement (116) en vue de corriger le profil d'épaisseur de la feuille soufflée, **caractérisé en ce que**, pour la réduction commandée du courant d'air de refroidissement sur la feuille soufflée (110), une partie (B) de l'air de refroidissement est respectivement séparée à des endroits répartis dans le sens circonférentiel de l'anneau de refroidissement en déviant l'air au moyen de chicanes ou d'aubes directrices (128; 144; 156; 228) réglables, et que la résistance hydraulique totale pour l'air de refroidissement dévié et non dévié est maintenue constante dans le segment périphérique considéré, indépendamment de la position des aubes directrices.

**9.** Dispositif pour la mise en oeuvre du procédé selon la revendication 8, **caractérisé en ce que** l'anneau de refroidissement (116) présente, radialement à l'extérieur de la fente de sortie (118), une couronne d'orifices de sortie (126), et que des chicanes ou aubes directrices (128; 144; 228) réglables sont disposées dans le courant d'air de refroidissement (A) à l'intérieur de l'anneau de refroidissement (116) de telle façon qu'elles font dévier une partie (B) du courant d'air de refroidissement vers les orifices de sortie (126) et que leur déplacement provoque la modification des sections de passage vers les orifices de sortie et vers la fente de sortie, de sorte que la résistance hydraulique totale reste sensiblement constante.

**10.** Dispositif selon la revendication 9, **caractérisé en ce qu'**à chaque orifice de sortie (126) est associée une aube directrice (128) séparée qui est guidée de manière mobile dans une ouverture (32) de la paroi (124) de l'anneau de refroidissement munie de l'orifice de sortie.

**11.** Dispositif selon la revendication 10, **caractérisé en ce que** les aubes directrices (228) sont conformées en clapets qui peuvent être pivotés autour de leur extrémité (232) postérieure dans la direction d'écoulement, hors du plan de la paroi de l'anneau de refroidissement, vers l'intérieur dudit anneau de refroidissement et qui présentent sur leur face tournée vers l'orifice de sortie (126) un contour de guidage (234) à section transversale semi-circulaire.

**12.** Dispositif pour la mise en oeuvre du procédé selon la revendication 8, **caractérisé en ce qu'**il comprend des aubes directrices (156) disposées, dans le courant d'air de refroidissement, sur la ou en aval de la fente de sortie (118), dont la position radiale et/ou l'angle d'attaque sont réglables.

**13.** Dispositif selon l'une des revendications 9 ou 12, **caractérisé en ce que** les aubes directrices sont constituées par un anneau (144) réalisé dans un matériau souple et tournant dans la direction circonférentielle de l'anneau de refroidissement (116), dont la position et/ou l'angle d'attaque peuvent être réglés au moyen de poussoirs (148) ou de bras de retenue (158) répartis dans le sens circonférentiel.

**14.** Procédé de fabrication de feuilles soufflées dans une installation d'extrusion-soufflage de feuilles, comprenant un anneau de refroidissement (316) qui entoure la feuille soufflée (310) et comporte une fente de sortie (318) annulaire pour l'air de refroidissement, par lequel le courant d'air de refroidissement est commandé dans les différentes sections périphériques de l'anneau de refroidissement (316), en vue de corriger le profil d'épaisseur de la feuille soufflée, par un resserrement ou un élargissement, segment par segment, de la fente de sortie (318), **caractérisé en ce que** la variation de la résistance hydraulique provoquée par la variation de la largeur de fente est compensée au moins en partie par le fait que, dans les segments correspondants en amont de la fente de sortie, le courant d'air de refroidissement est réduit en fonction de la largeur de la fente.

**15.** Dispositif pour la mise en oeuvre du procédé selon la revendication 14, dans lequel le bord extérieur de la fente de sortie (318) est délimité par des coulisses (320) mo-biles dans le sens radial, **caractérisé en ce qu'**à chaque coulisse est associé un système d'étranglement (326) inséré dans le courant d'air de refroidissement en amont de la fente de sortie, qui est couplé en entraînement avec la coulisse et qui est actionné dans le sens d'une réduction plus importante du courant d'air de refroidissement lorsque la coulisse est déplacée dans le sens d'une plus grande largeur de fente.

**16.** Dispositif selon la revendication 15, **caractérisé en ce que** la fente de sortie (318) est divisée par des cloisons radiales (322) en différents segments, et que la surface (324) de la coulisse qui délimite la fente de sortie est bombée vers l'avant dans la région entre les cloisons de manière que le segment de la fente de sortie présente une largeur plus faible au milieu qu'à proximité des cloisons.

**17.** Dispositif selon l'une des revendications 3, 9 ou 15, **caractérisé en ce que** la fente de sortie est divisée par des cloisons radiales en différents segments et munie de moyens pour uniformiser le courant d'air de refroidissement.

**18.** Dispositif selon la revendication 17, **caractérisé en ce que** les moyens pour uniformiser le courant d'air de refroidissement sont constitués par une arête perturbatrice (332) générant des turbulences située au bord inférieur de la fente de sortie.

**19.** Dispositif selon la revendication 17, **caractérisé en ce que** chaque segment de la fente de sortie est divisé par des barrettes radiales (334) en segments partiels plus petits.

# Fig. 1

Fig. 2

Fig. 3

Fig. 4(A)

Fig. 4(B)

Fig. 4(C)

Fig. 5

Fig. 6

Fig. 7

Fig. 8

Fig. 9

Fig. 10

Fig. 11

Fig. 12

22

Fig. 13

Fig. 14

Fig. 15

Fig. 16

Fig. 17